# DEMANDE DE BREVET EUROPEEN

(11) **EP 1 650 745 A1**
(43) Date de publication de la demande: **26.04.2006**
(21) Numéro de dépôt: 05291943.8
(22) Date de dépôt: 20.09.2005
(51) Int. Cl.: G10L 15/22

(54) **Procédé et programme d'ordinateur pour gérer une activité de production sonore d'un système d'interaction personne-machine**

(30) Priorité: 19.10.2004 FR 0411093
(71) Demandeur: France Telecom S.A., 75015 Paris (FR)
(72) Inventeur: Paillet, Eric, 22730 Tregastel (FR); Dubois, Dominique, 22560 Pleumeur-Bodou (FR); Merour, Glenn, 22300 Lannion (FR)
(74) Mandataire: Bentz, Jean-Paul

(57) **Abrégé**

L'invention concerne un procédé de gestion d'une activité de production sonore d'un système d'interaction personne-machine à composante vocale, consistant notamment à détecter et capter une activité acoustique externe émanant d'un agent externe au système, et à analyser le contenu sémantique de tout énoncé éventuellement inclus dans l'activité acoustique externe.

Le procédé de l'invention inclut une mesure d'une période de recouvrement de l'activité acoustique externe et de la production sonore du système, un processus d'inhibition de toute interruption de la production sonore du système aussi longtemps que la durée de la période de recouvrement reste inférieure à une durée limite prédéterminée, et un processus d'interruption de la production sonore du système dans le cas où, simultanément, l'activité acoustique externe est assimilable à une activité vocale et où la durée de la période de recouvrement atteint ou dépasse la durée limite.

## Description

L'invention concerne, de façon générale, les services vocaux interactifs utilisant la reconnaissance de parole pour les communications en langage naturel.

Plus précisément, l'invention concerne, selon un premier de ses aspects, un procédé de gestion d'une activité de production sonore d'un système d'interaction personne-machine à composante vocale, notamment à reconnaissance vocale et à production sonore, ce procédé comprenant des opérations consistant à exercer l'activité de production sonore du système par exemple en produisant des énoncés, à détecter et capter une activité acoustique externe émanant d'un agent externe au système, et à analyser le contenu sémantique de tout énoncé éventuellement inclus dans l'activité acoustique externe.

Dans le cadre de l'utilisation des services vocaux interactifs dotés d'une fonctionnalité de reconnaissance de la parole, il arrive que l'utilisateur parle alors que le serveur auquel il s'adresse diffuse dans le même temps un guide sonore.

Pour cette raison, les systèmes vocaux interactifs offrent souvent une fonctionnalité d'intervention en force, connue de l'homme du métier sous la dénomination anglaise de "barge-in", cette fonctionnalité offrant à l'utilisateur d'un tel système interactif la possibilité d'interrompre, par une intervention orale, la production sonore de ce système (voix humaine ou de synthèse, temps réel ou enregistré, musique, bruits, son, etc.) pour pouvoir formuler une demande.

Le fonctionnement classique du "barge-in", tel qu'il est prévu par exemple dans la norme VoiceXML 2, définit deux cas d'utilisation bien distincts, à savoir (1) l'interruption du guide peut être immédiate, c'est-à-dire effectuée dès qu'un bruit (ou une parole) est détecté, et (2) l'interruption du guide peut n'être réalisée que lorsque le moteur de reconnaissance vocale du système retourne le résultat de son analyse.

Ce fonctionnement n'est pas adapté aux services vocaux en langage naturel (on parle aussi de services en parole continue) pour les raisons suivantes.

Tout d'abord l'interruption immédiate du guide dès qu'un bruit ou une parole est détecté pose le problème que l'utilisateur d'un service vocal peut évoluer dans un environnement bruité, de sorte que les guides seront systématiquement interrompus dès qu'un bruit sera détecté par le serveur.

Le cas où le guide n'est interrompu que quand le moteur de reconnaissance vocale retourne un résultat n'est pas davantage satisfaisant pour les services vocaux en langage naturel car les phrases prononcées par l'utilisateur sont, de fait, potentiellement longues et complexes. Il en résulte un accroissement correspondant du temps de traitement par le module de reconnaissance vocale, de sorte que les guides sonores ne seront pas interrompus assez rapidement. De fait, les expérimentations qui ont pu être menées tendent à montrer que les utilisateurs s'arrêtent de parler quand ils s'aperçoivent que le serveur n'a pas interrompu le guide sonore de façon suffisamment précoce, typiquement dans un délai de l'ordre d'une à deux secondes à compter du début de l'intervention vocale de l'utilisateur.

Dans ce contexte, l'invention a notamment pour but de proposer un procédé de gestion de l'activité de production sonore d'un système d'interaction personne-machine à composante vocale exempt des défauts précédemment évoqués.

A cette fin, le procédé de l'invention, par ailleurs conforme à la définition générique qu'en donne le préambule ci-dessus, est essentiellement caractérisé en ce qu'il comprend en outre une opération de mesure de recouvrement consistant à mesurer la durée d'une période de recouvrement de l'activité acoustique externe et de l'activité de production sonore du système, et un processus de décision consistant au moins à inhiber toute interruption prématurée de l'activité de production sonore du système aussi longtemps que la durée de la période de recouvrement reste inférieure à une durée limite prédéterminée, et à interrompre l'activité de production sonore du système dans le cas où, à la fois, l'activité acoustique externe est assimilable à une activité vocale et où la durée de la période de recouvrement atteint ou dépasse la durée limite, cette durée limite étant de préférence réglable.

Par exemple, le processus de décision peut en outre consister au moins à reprendre, après interruption, l'activité de production sonore du système dans le cas où l'activité vocale détectée de l'agent externe n'est pas reconnue comme porteuse d'un énoncé adapté à une interaction possible entre cet agent externe et le système.

Dans le cas où l'activité de production sonore du système a été interrompue et où l'activité vocale détectée de l'agent externe n'est pas reconnue comme porteuse d'un énoncé adapté à une interaction possible entre cet agent externe et le système, le processus de décision peut en outre consister au moins à relancer l'activité de production sonore du système à partir de l'état d'avancement dans lequel se trouvait cette production sonore au plus tard à la fin de la période de recouvrement.

Par ailleurs, dans le cas où l'activité de production sonore du système a été interrompue et où l'activité vocale détectée de l'agent externe est reconnue comme porteuse d'un énoncé adapté à une interaction possible entre cet agent externe et le système, le processus de décision peut en outre consister au moins à sélectionner et à déclencher une nouvelle activité de production sonore du système, adaptée à l'interaction possible.

L'invention concerne également un programme d'ordinateur propre à gérer une activité de production sonore d'un système d'interaction personne-machine à composante vocale, notamment à reconnaissance vocale et à production sonore, ce programme comprenant un module de production sonore ou acoustique chargé de l'activité de production sonore du système, un module de détection acoustique propre à surveiller l'apparition d'une activité acoustique externe émanant d'un agent externe au système, un module de reconnaissance de parole propre à décomposer en une suite de mots tout énoncé éventuellement inclus dans l'activité acoustique externe, et un module d'analyse sémantique, éventuellement combiné au module de reconnaissance, et propre à analyser le contenu sémantique d'une telle suite de mots, ce programme étant caractérisé en ce qu'il comprend en outre un module de gestion de production sonore propre à déclencher, à l'apparition d'une activité acoustique externe pendant une période d'activité de production sonore du système, une mesure de la durée de la période de recouvrement de l'activité acoustique externe et de l'activité de production sonore du système, propre à inhiber toute interruption prématurée de l'activité de production sonore du système aussi longtemps que la durée de la période de recouvrement reste inférieure à une durée limite prédéterminée, et propre à interrompre l'activité de production sonore du système dans le cas où, à la fois, l'activité acoustique externe est assimilable à une activité vocale et où la durée de la période de recouvrement atteint ou dépasse la durée limite.

De préférence, le module de gestion de production sonore est également propre à reprendre, après interruption, l'activité de production sonore du système dans le cas où l'activité vocale détectée de l'agent externe n'est pas reconnue comme porteuse d'un énoncé adapté à une interaction possible entre cet agent externe et le système.

Le module de gestion de production sonore peut en outre être propre, après une interruption de l'activité de production sonore du système et un échec d'assimilation de l'activité vocale détectée de l'agent externe à un énoncé adapté à une interaction possible entre cet agent externe et le système, à relancer l'activité de production sonore du système à partir de l'état d'avancement dans lequel se trouvait cette production sonore au plus tard à la fin de la période de recouvrement.

Il est également judicieux de prévoir que le module de gestion de production sonore soit propre, après une interruption de l'activité de production sonore du système et une assimilation réussie de l'activité vocale détectée de l'agent externe à un énoncé adapté à une interaction possible entre cet agent externe et le système, à déclencher une nouvelle activité de production sonore du système, adaptée à l'interaction possible.

Enfin, le module de gestion de production sonore est avantageusement conçu pour permettre un réglage de la durée limite.

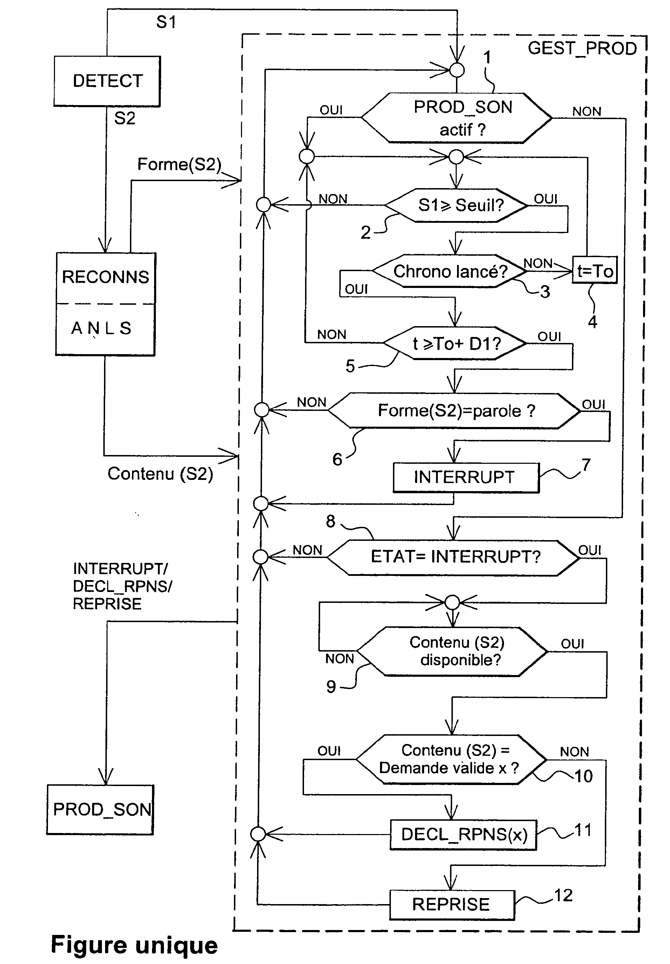

D'autres caractéristiques et avantages de l'invention ressortiront clairement de la description qui en est faite ci-après, à titre indicatif et nullement limitatif, en référence au dessin annexé dont l'unique figure est un schéma opérationnel illustrant simultanément le procédé et le programme de l'invention.

Comme annoncé antérieurement, le procédé de l'invention, qui est typiquement mis en oeuvre par un programme d'ordinateur, a pour finalité de gérer l'activité de production sonore d'un système d'interaction personne-machine à composante vocale, en particulier d'un système doté d'une fonctionnalité de reconnaissance vocale et d'une fonctionnalité de production sonore.

Ce système comprend donc un module de production sonore ou acoustique PROD_SON, chargé de l'activité de production sonore du système et capable de diffuser par exemple des fichiers sonores, voire de la synthèse vocale.

Ce système comprend également un module de détection acoustique DETECT propre à surveiller l'apparition d'une activité acoustique externe émanant de tout agent externe au système, par exemple d'un utilisateur de ce système ou de son environnement sonore.

D'autre part encore, ce système comprend un module RECONNS de reconnaissance de parole propre à décomposer en une suite de mots tout énoncé éventuellement inclus dans l'activité acoustique externe, ainsi qu'un module d'analyse sémantique ANLS, éventuellement combiné au module de reconnaissance RECONNS, et propre à analyser le contenu sémantique d'une telle suite de mots, et donc de toute parole prononcée par l'utilisateur.

A l'apparition d'une activité acoustique externe émanant d'un agent externe, le module de détection DETECT produit des signaux de sortie tels que S1 et S2.

Le premier signal S1 contient au moins l'information du début de l'activité acoustique externe et de son intensité sonore.

Le deuxième signal S2, qui est transmis au module RECONNS de reconnaissance de parole, reflète intégralement le contenu de cette activité acoustique, sélectivement atténuée, le cas échéant, hors de la plage des fréquences de la parole.

Après réception du signal S2, ce module de reconnaissance RECONNS délivre, dans un délai relativement court, un premier signal de sortie Forme(S2) renseignant sur la nature vocale ou non de l'activité acoustique externe et distinguant donc entre le cas où cette activité est attribuable à la parole et celui où elle n'est attribuable qu'à des bruits, après quoi le module d'analyse ANLS délivre, dans un délai relativement plus long, un deuxième signal de sortie Contenu(S2) renseignant sur le contenu sémantique de l'activité acoustique externe, lorsque cette dernière est de nature vocale.

Selon l'invention, la gestion de l'activité de production sonore du système est confiée à un module de gestion de production sonore GEST_PROD qui rassemble les principales caractéristiques de l'invention et qui reçoit les signaux S1, S2, Forme(S2), et Contenu(S2).

Un exemple possible d'organisation fonctionnelle du module de gestion GEST_PROD est décrit ci-après en référence à la figure.

Le module GEST_PROD effectue d'abord une opération 1 consistant à déterminer si le module de production sonore PROD_SON est ou non en cours d'activité.

Dans la négative, le module GEST_PROD effectue un saut de traitement jusqu'à une opération 8, constituée par un test qui sera décrit ultérieurement.

Dans l'affirmative, le module GEST_PROD effectue une opération 2 consistant à déterminer si le signal S1 représentatif de l'activité acoustique externe atteint ou dépasse un seuil minimum prédéterminé.

Dans la négative, le module GEST_PROD reboucle son traitement sur l'opération 1.

Dans l'affirmative, le module GEST_PROD effectue une opération 3 consistant à déterminer si un chronomètre destiné à mesurer la durée de recouvrement de l'activité acoustique externe et de la production sonore du système a été lancé.

Dans la négative, le module GEST_PROD effectue une opération 4 consistant à déclencher le chronomètre en mémorisant, sous forme d'un instant constant To, la valeur de l'instant courant, puis reboucle son traitement sur l'opération 2.

Dans l'affirmative, le module GEST_PROD effectue une opération 5 consistant à déterminer si une durée D1, de valeur paramétrable, s'est ou non écoulée depuis l'instant To de déclenchement du chronomètre.

Dans la négative, le module GEST_PROD reboucle son traitement sur l'opération 2.

Dans l'affirmative, le module GEST_PROD effectue une opération 6 consistant à déterminer si le signal Forme(S2) attribue ou non l'activité acoustique à une activité vocale.

Dans la négative, le module GEST_PROD reboucle son traitement sur l'opération 1.

Dans l'affirmative, le module GEST_PROD effectue une opération 7 consistant à produire, à destination du module PROD_SON de production sonore, une commande INTERRUPT ayant pour effet d'interrompre la production sonore de ce module PROD_SON, le module GEST_PROD rebouclant ensuite son traitement sur l'opération 1.

Dans le cas où le module de production sonore PROD_SON n'est pas en cours d'activité, le module GEST_PROD effectue une opération 8 déjà évoquée ci-dessus et consistant à déterminer si l'état dans lequel se trouve le module PROD_SON de production sonore résulte ou non de la réception d'une commande d'interruption INTERRUPT.

Dans la négative, le module GEST_PROD reboucle son traitement sur l'opération 1.

Dans l'affirmative, le module GEST_PROD effectue une opération 9 consistant à déterminer si le signal Contenu(S2) a déjà été délivré par le module d'analyse sémantique ANLS.

Dans la négative, le module GEST_PROD reboucle son traitement sur l'opération 9.

Dans l'affirmative, le module GEST_PROD effectue une opération 10 consistant à déterminer si le signal Contenu(S2) exprime une demande valide X à laquelle le système de production sonore PROD_SON pourrait apporter une réponse appropriée.

Dans l'affirmative, le module GEST_PROD effectue une opération 11 consistant à produire, à destination du module PROD_SON de production sonore, une commande DECL_RPNS(X) ayant pour effet d'apporter à l'agent externe ayant produit l'énoncé Contenu(S2), c'est-à-dire typiquement un utilisateur du système, une réponse appropriée à sa demande, puis reboucle son traitement sur l'opération 1.

Dans la négative, le module GEST_PROD effectue une opération 12 consistant à produire, à destination du module PROD_SON de production sonore, une commande REPRISE ayant pour effet de relancer la production sonore antérieurement en cours et prématurément interrompue.

Il est possible de faire en sorte que la production sonore du module PROD_SON soit relancée soit depuis son début, soit à partir de l'état d'avancement dans lequel elle se trouvait à l'instant To de déclenchement du chronomètre, soit encore à partir de l'instant où cette production sonore a été interrompue, c'est-à-dire au plus tard à la fin de la période de recouvrement entre l'activité acoustique externe et cette production sonore.

Enfin, le module GEST_PROD reboucle son traitement sur l'opération 1.

## Revendications

1. Procédé de gestion d'une activité de production sonore d'un système d'interaction personne-machine à composante vocale, notamment à reconnaissance vocale et à production sonore, ce procédé comprenant des opérations consistant à exercer l'activité de production sonore du système par exemple en produisant des énoncés, à détecter et capter une activité acoustique externe émanant d'un agent externe au système, et à analyser le contenu sémantique de tout énoncé éventuellement inclus dans l'activité acoustique externe, **caractérisé en ce qu'**il comprend en outre une opération de mesure de recouvrement consistant à mesurer la durée d'une période de recouvrement de l'activité acoustique externe et de l'activité de production sonore du système, et un processus de décision consistant au moins à inhiber toute interruption prématurée de l'activité de production sonore du système aussi longtemps que la durée de la période de recouvrement reste inférieure à une durée limite prédéterminée (D1), et à interrompre l'activité de production sonore du système dans le cas où, à la fois, l'activité acoustique externe est assimilable à une activité vocale et où la durée de la période de recouvrement atteint ou dépasse la durée limite (D1).

2. Procédé suivant la revendication 1, **caractérisé en ce que** la durée limite (D1) est réglable.

3. Procédé suivant la revendication 1 ou 2, **caractérisé en ce que** le processus de décision consiste en outre au moins à reprendre, après interruption, l'activité de production sonore du système dans le cas où l'activité vocale détectée de l'agent externe n'est pas reconnue comme porteuse d'un énoncé adapté à une interaction possible entre cet agent externe et le système.

4. Procédé suivant la revendication 3, **caractérisé en ce que**, dans le cas où l'activité de production sonore du système a été interrompue et où l'activité vocale détectée de l'agent externe n'est pas reconnue comme porteuse d'un énoncé adapté à une interaction possible entre cet agent externe et le système, le processus de décision consiste en outre au moins à relancer l'activité de production sonore du système à partir de l'état d'avancement dans lequel se trouvait cette production sonore au plus tard à la fin de la période de recouvrement.

5. Procédé suivant l'une quelconque des revendications précédentes, **caractérisé en ce que**, dans le cas où l'activité de production sonore du système a été interrompue et où l'activité vocale détectée de l'agent externe est reconnue comme porteuse d'un énoncé adapté à une interaction possible entre cet agent externe et le système, le processus de décision consiste en outre au moins à sélectionner et à déclencher une nouvelle activité de production sonore du système, adaptée à l'interaction possible.

6. Programme d'ordinateur propre, lorsque ledit programme fonctionne sur un ordinateur, à gérer une activité de production sonore d'un système d'interaction personne-machine à composante vocale, notamment à reconnaissance vocale et à production sonore, ce programme comprenant un module (PROD_SON) de production sonore ou acoustique chargé de l'activité de production sonore du système, un module (DETECT) de détection acoustique propre à surveiller l'apparition d'une activité acoustique externe émanant d'un agent externe au système, un module (RECONNS) de reconnaissance de parole propre à décomposer en une suite de mots tout énoncé éventuellement inclus dans l'activité acoustique externe, et un module d'analyse sémantique (ANLS), éventuellement combiné au module de reconnaissance (RECONNS), et propre à analyser le contenu sémantique d'une telle suite de mots, **caractérisé en ce qu'**il comprend en outre un module (GEST_PROD) de gestion de production sonore propre à déclencher, à l'apparition d'une activité acoustique externe pendant une période d'activité de production sonore du système, une mesure de la durée de la période de recouvrement de l'activité acoustique externe et de l'activité de production sonore du système, propre à inhiber toute interruption prématurée de l'activité de production sonore du système aussi longtemps que la durée de la période de recouvrement reste inférieure à une durée limite prédéterminée (D1), et propre à interrompre (INTERRUPT) l'activité de production sonore du système dans le cas où, à la fois, l'activité acoustique externe est assimilable à une activité vocale et où la durée de la période de recouvrement atteint ou dépasse la durée limite (D1).

7. Programme d'ordinateur suivant la revendication 6, **caractérisé en ce que**, lorsque ledit programme fonctionne sur un ordinateur, le module (GEST_PROD) de gestion de production sonore est également propre à reprendre, après interruption, l'activité de production sonore du système dans le cas où l'activité vocale détectée de l'agent externe n'est pas reconnue comme porteuse d'un énoncé adapté à une interaction possible entre cet agent externe et le système.

8. Programme d'ordinateur suivant la revendication 7, **caractérisé en ce que**, lorsque ledit programme fonctionne sur un ordinateur, le module (GEST_PROD) de gestion de production sonore est propre, après une interruption de l'activité de production sonore du système et un échec d'assimilation de l'activité vocale détectée de l'agent externe à un énoncé adapté à une interaction possible entre cet agent externe et le système, à relancer l'activité de production sonore du système à partir de l'état d'avancement dans lequel se trouvait cette production sonore au plus tard à la fin de la période de recouvrement.

9. Programme d'ordinateur suivant l'une quelconque des revendications 6 à 8, **caractérisé en ce que**, lorsque ledit programme fonctionne sur un ordinateur, le module (GEST_PROD) de gestion de production sonore est propre, après une interruption (INTERRUPT) de l'activité de production sonore du système et une assimilation réussie de l'activité vocale détectée de l'agent externe à un énoncé adapté à une interaction possible entre cet agent externe et le système, à déclencher (DECL_RPNS(X)) une nouvelle activité de production sonore du système, adaptée à l'interaction possible.

10. Programme d'ordinateur suivant l'une quelconque des revendications 6 à 9, **caractérisé en ce que** le module (GEST_PROD) de gestion de production sonore est conçu pour permettre un réglage de la durée limite (D1), lorsque ledit programme fonctionne sur un ordinateur.
